# EUROPÄISCHE PATENTANMELDUNG

(11) **EP 4 466 979 A2**
(43) Veröffentlichungstag der Anmeldung: **27.11.2024**
(21) Anmeldenummer: 24161491.6
(22) Anmeldetag: 05.03.2024
(51) Int. Cl.: A01F 29/06, A01F 29/09, B02C 18/14, B02C 18/18

(54) **HÄCKSELTROMMEL FÜR EINEN FELDHÄCKSLER**

(30) Priorität: 05.04.2023 DE 102023108774
(71) Anmelder: Maschinenfabrik Bernard Krone GmbH & Co. KG, 48480 Spelle (DE)
(72) Erfinder: Hülsmann, Michael, 49599 Voltlage/Weese (DE); Stabel, Peter, 54584 Gönnersdorf (DE)

(57) **Zusammenfassung**

Die Erfindung betrifft eine Häckseltrommel für einen Feldhäcksler, die zu einem Umlauf in eine Umlaufrichtung um eine Drehachse ausgebildet ist. Die Häckseltrommel umfasst eine Eingangswelle, eine zur Eingangswelle ortsfest angeordnete Hohlwelle und zumindest ein erstes Fixierelement, das zumindest unter anderem an einer Außenfläche der Hohlwelle angeordnet ist und sich in die Umlaufrichtung erstreckt. Außerdem umfasst die Häckseltrommel ein erstes Trägerelement, das an dem Fixierelement lösbar befestigt ist und an dem ein erstes Schneidelement mit einer sich in einer Radialansicht zur Umlaufrichtung angewinkelt über das Fixierelement hinwegerstreckenden Schneide zum Schneiden von Erntegut angeordnet ist. Außerdem umfasst die Häckseltrommel ein zweites Trägerelement, das an dem Fixierelement lösbar befestigt ist und an dem ein zum ersten Schneidelement in die Umlaufrichtung benachbartes, zweites Schneidelement mit einer sich in der Radialansicht zur Umlaufrichtung angewinkelt über das Fixierelement hinwegerstreckenden Schneide zum Schneiden von Erntegut angeordnet ist. Erfindungsgemäß ist das erste Trägerelement vom zweiten Trägerelement in die Umlaufrichtung beabstandet.

## Beschreibung

Die Erfindung betrifft eine Häckseltrommel für einen Feldhäcksler. Die Häckseltrommel ist zu einem Umlauf in eine Umlaufrichtung um eine Drehachse ausgebildet. Die Häckseltrommel weist eine Eingangswelle und eine zur Eingangswelle ortsfest angeordnete Hohlwelle auf. Außerdem weist die Häckseltrommel zumindest ein erstes Fixierelement auf. Das erste Fixierelement ist zumindest unter anderem an einer Außenfläche der Hohlwelle angeordnet und erstreckt sich in die Umlaufrichtung. Außerdem weist die Häckseltrommel ein erstes Trägerelement auf. Das erste Trägerelement ist an dem ersten Fixierelement lösbar befestigt. An dem ersten Trägerelement ist ein erstes Schneidelement angeordnet, das eine Schneide zum Schneiden von Erntegut aufweist, die sich in einer Radialansicht zur Umlaufrichtung angewinkelt über das erste Fixierelement hinwegerstreckt. Außerdem weist die Häckseltrommel ein zweites Trägerelement auf. Das zweite Trägerelement ist an dem ersten Fixierelement lösbar befestigt. An dem zweiten Trägerelement ist ein zum ersten Schneidelement in die Umlaufrichtung benachbartes zweites Schneidelement angeordnet. Das zweite Schneidelement weist eine Schneide zum Schneiden von Erntegut auf, die sich in der Radialansicht zur Umlaufrichtung angewinkelt über das erste Fixierelement hinwegerstreckt.

Die Häckseltrommel dient grundsätzlich zu einer Zerkleinerung von Erntegut. Hierzu rotiert die Häckseltrommel im Betrieb um die Drehachse, während Erntegut auf sie zubewegt wird. Die Schneidelemente schneiden pro Umlauf einen Teil des zugeführten Erntegutes. Es hat sich gezeigt, dass bei Feldhäckslern mit den heute geforderten Erntegutdurchsätzen eine ausreichende Steifigkeit der Häckseltrommel nur durch den Einsatz der Hohlwelle sicherzustellen ist.

Eine vorbeschriebene Häckseltrommel ist aus der DE 10 2012 023 431 A1 bekannt. Hier sind die Trägerelemente von aneinander anliegenden Ringsegmenten gebildet, die bezogen auf die Drehachse in eine axiale Richtung an das Fixierelement angelegt werden. Nachteilig ist die bekannte Häckseltrommel insbesondere bei unbeabsichtigten, jedoch im Betrieb immer wieder auftretenden Kollision eines der Schneidelemente mit einem nicht zu schneidenden Gegenstand. Auf eine solche Kollision hin verformt das kollidierende Schneidelement das Trägerelement, an dem es angeordnet ist, das wiederum notwendigerweise das benachbarte Trägerelement verformt. Solche Kollisionen treten mit der bekannten Häckseltrommel relativ häufig auf, da die Schneidelemente entlang ihrer Länge nur punktuell von den vorhandenen Trägerelementen gestützt werden und dazwischen relativ labil sind. Die Verformung beider Trägerelemente bedeutet, dass daraufhin zur Instandsetzung der Häckseltrommel zumindest beide Trägerelemente sowie die daran angeordneten Schneidelemente auszutauschen sind, womit neben erheblichen Materialkosten ein großer Zeitaufwand einhergeht, der unbeabsichtigte Standzeiten für den Feldhäcksler bedeutet.

Aufgabe der vorliegenden Erfindung ist eine Verbesserung der Häckseltrommel derart, dass die durch Schäden der Häckseltrommel verursachten Standzeiten des Feldhäckslers verringert werden. Außerdem ist es Aufgabe der Erfindung, ein Verfahren zur Herstellung einer derart verbesserten Häckseltrommel zu entwickeln.

Erfindungsgemäß wird die Aufgabe zum Ersten dadurch gelöst, dass das erste Trägerelement vom zweiten Trägerelement in die Umlaufrichtung beabstandet ist. Die beiden Trägerelemente haben keinen Kontakt zueinander. Durch die Beabstandung der Trägerelemente voneinander lässt sich der Umfang der auf eine vorbeschriebene Kollision hin auszutauschenden Teile reduzieren. Mit einer Kollision des ersten Schneidelementes geht zwar eine unvermeidbare Verformung des ersten Trägerelementes einher. Auf das zweite Trägerelement hat diese Verformung aufgrund der Beabstandung jedoch keine Auswirkung. Deshalb ist zur Instandsetzung der Häckseltrommel anschließend nur das erste Trägerelement mit dem ersten Schneidelement auszutauschen, womit sich die Standzeiten des Feldhäckslers gegenüber dem Stand der Technik erheblich reduzieren lassen.

Die Eingangswelle der Häckseltrommel dient zur Aufnahme eines Drehmomentes von einem Antriebsmittel wie zum Beispiel einem Riemen. Die Eingangswelle ist zumindest teilweise axial versetzt zur Hohlwelle angeordnet. Die Eingangswelle ist insbesondere zumindest teilweise als Vollwelle ausgebildet, wobei der Durchmesser der Hohlwelle zumindest ein Vielfaches des Durchmessers der Vollwelle ist.

Die Eingangswelle ist unmittelbar an der Hohlwelle angeordnet oder mittels eines weiteren Bestandteils der Häckseltrommel mit der Hohlwelle verbunden. Relativ zur Eingangswelle ist die Hohlwelle unbeweglich. Die Eingangswelle ist mit der Hohlwelle oder dem Bestandteil lösbar oder unlösbar verbunden. Alternativ kann die Eingangswelle einteilig mit der Hohlwelle oder dem Bestandteil ausgebildet sein.

Die Hohlwelle ist insbesondere als Trommelkörper ausgebildet. Eine Symmetrieachse der Hohlwelle entspricht der Drehachse. Bei der Drehachse handelt es sich um eine geometrische Achse, nicht um eine gegenständliche Achse. Die Hohlwelle ist bevorzugt zumindest über einen überwiegenden Teil seiner Länge, insbesondere über seine gesamte Länge hohl. Eine Querschnittfläche der Hohlwelle ist in die axiale Richtung bevorzugt unveränderlich. Die Außenfläche ist bevorzugt zylindermantelförmig ausgebildet. Dabei wird die Hohlwelle als Bauteil unabhängig von etwaigen weiteren Bestandteilen der Häckseltrommel verstanden, die nach Ausbildung der Hohlwelle lösbar oder unlösbar, das heißt insbesondere nicht zerstörungsfrei von der Hohlwelle trennbar, an der Hohlwelle angeordnet sind. Das gilt insbesondere in Bezug auf das Fixierelement. Der Außendurchmesser der Hohlwelle entspricht bevorzugt zumindest einem Drittel des Außendurchmessers der gesamten Häckseltrommel.

Das Fixierelement ist bevorzugt auf die Hohlwelle aufgeschweißt. Es erstreckt sich insbesondere derart in die Umlaufrichtung, dass seine Haupterstreckungsrichtung die Umlaufrichtung ist. Das Fixierelement liegt entlang seiner gesamten Erstreckung in die Umlaufrichtung bevorzugt lückenlos an der Hohlwelle an. Das Fixierelement ist vorzugsweise ringförmig oder ringsegmentförmig ausgebildet. Im Falle einer ringförmigen Ausbildung ist das Fixierelement optional mehrteilig ausgebildet. Im Falle einer ringsegmentförmigen Ausbildung schließen sich insbesondere mehrere ringsegmentförmige Fixierelemente in die Umlaufrichtung aneinander an, um gemeinsam die Ringform auszubilden. Die Ringform meint insbesondere, dass in einem Querschnitt durch das Fixierelement der Raum innerhalb der Hohlwelle frei vom Fixierelement ist. Das Fixierelement ist bevorzugt ein Metallgussteil, besonders bevorzugt aus einer unmittelbar schweißbaren Legierung.

Die Trägerelemente liegen bevorzugt unmittelbar an dem Fixierelement an. Die lösbare Befestigung der Trägerelemente ermöglicht es erst, die Häckseltrommel durch einen Austausch einzelner Teile nach einer Kollision instand zu setzen, wohingegen eine Häckseltrommel mit verschweißten Trägerelementen nach einer Kollision in der Regel insgesamt auszutauschen ist. Die Trägerelemente sind von der Hohlwelle beabstandet angeordnet. Die Trägerelemente sind mit dem Fixierelement bevorzugt verschraubt. Bei den Trägerelementen handelt es sich vorzugsweise um gezogene Metallprofile. Die Trägerelemente sind bevorzugt identisch ausgebildet. Die Häckseltrommel weist insbesondere kein mit einem Schneidelement ausgestattetes Trägerelement auf, das nicht lösbar befestigt ist. Die Position des zweiten Trägerelementes unterscheidet sich von der Position des ersten Trägerelementes vorzugsweise einzig durch eine Verschwenkung um die Drehachse. Das erste und das zweite Trägerelement sind daher in die Umlaufrichtung voneinander beabstandet. Die Trägerelemente sind bevorzugt in die Umlaufrichtung benachbart zueinander angeordnet. Zwischen dem ersten Trägerelement und dem zweiten Trägerelement ist zumindest bezogen auf die Umlaufrichtung kein weiteres Trägerelement angeordnet.

Bei den Schneidelementen handelt es sich insbesondere um Messer. Das erste Schneidelement und das zweite Schneidelement sind insbesondere identisch ausgebildet. Die Schneidelemente sind bevorzugt mit dem jeweiligen Trägerelement verschraubt. Zwischen dem ersten Schneidelement und dem zweiten Schneidelement ist in Bezug auf die Umlaufrichtung vorzugsweise kein weiteres Schneidelement angeordnet. Die Querschnittsfläche der Schneidelemente erstreckt sich bevorzugt anteilig tangential und anteilig radial länglich und mündet in ihrer jeweiligen Schneide.

Die Schneiden wirken im Betrieb insbesondere mit einer zur Drehachse unbeweglich angeordneten Gegenschneide zusammen. Das Erntegut wird insbesondere nach Art eines Scherenschnittes zwischen einer der Schneiden und der Gegenschneide geschnitten. Die Schneiden definieren den Außendurchmesser der Häckseltrommel. Im Betrieb hat jeder Punkt der Schneide einen konstanten Abstand zur Drehachse.

Insbesondere liegt jeder Punkt der Schneide in einer auf die Drehachse bezogenen, gedachten Zylindermantelfläche oder Kegelmantelfläche. Die Schneide ist bevorzugt zur axialen Richtung angewinkelt und/oder spiralförmig um die Drehachse ausgebildet.

Das erste Schneidelement und das zweite Schneidelement gehören zu einem ersten Satz von Schneidelementen, die in dem genannten Querschnitt geschnitten werden. Der erste Satz von Schneidelementen weist bevorzugt insgesamt 18 Schneidelemente auf. Zusätzlich zum ersten Satz der Schneidelemente weist die Häckseltrommel bevorzugt einen zweiten Satz von Schneidelementen auf, der zum ersten Satz in die axiale Richtung versetzt angeordnet ist und grundsätzlich gleichartig ausgebildet ist. Der zweite Satz ist in Relation zum ersten Satz besonders bevorzugt an einer zur Drehachse rechtwinkligen Spiegelebene gespiegelt und um die Drehachse verschwenkt angeordnet.

Richtungs-, perspektiv- und weitere achsenbezogene Angaben sind grundsätzlich als auf die Drehachse bezogen zu verstehen. Die Radialansicht ist derart zu verstehen, dass die Sichtrichtung parallel zu einer Radialen ist, die Häckseltrommel also rechtwinklig zur Drehachse betrachtet wird.

Die erfindungsgemäße Häckseltrommel ist insbesondere Teil eines erfindungsgemäßen Feldhäckslers. Der Feldhäcksler weist ein Fahrwerk und einen Führerstand auf. Ferner weist der Feldhäcksler eine Aufnahmeeinrichtung zur Aufnahme von Pflanzen als Erntegut und eine Auswurfeinrichtung zum Auswurf des zerkleinerten Erntegutes auf.

Vorzugsweise ist das erste Trägerelement an einem zweiten Fixierelement lösbar befestigt. Das zweite Fixierelement ist zumindest teilweise in die axiale Richtung von dem ersten Fixierelement beabstandet. Außerdem ist das zweite Fixierelement zumindest unter anderem an der Außenfläche der Hohlwelle angeordnet und erstreckt sich das zweite Fixierelement in die Umlaufrichtung. Das erste Trägerelement erstreckt sich in die axiale Richtung vom ersten bis zum zweiten Fixierelement und ist insbesondere mit beiden Fixierelementen verschraubt. Die Schneide des ersten Schneidelementes erstreckt sich in der Radialansicht bevorzugt über beide Fixierelemente hinweg. Die Fixierelemente gleichen sich bevorzugt zumindest hinsichtlich ihrer von der Drehachse abgewandten Oberfläche und/oder betreffend ihrer axialen Erstreckung. Zwischen dem ersten und dem zweiten Fixierelement befindet sich insbesondere ein Hohlraum, der in radialer Richtung von dem ersten Trägerelement und der Hohlwelle umgrenzt ist. Durch die Befestigung des ersten Trägerelementes an den beiden Fixierelementen lässt sich eine höhere Stabilität erreichen. Insbesondere kann so das erste Schneidelement über einen größeren Teil seiner axialen Erstreckung durch das erste Trägerelement gestützt werden, wodurch einer Verformung des ersten Schneidelementes wirksam entgegengewirkt wird.

Besonders bevorzugt ist das erste Trägerelement an einem dritten Fixierelement lösbar befestigt. Das dritte Fixierelement ist in der axialen Richtung zwischen dem ersten Fixierelement und dem zweiten Fixierelement angeordnet, von denen es jeweils zumindest teilweise in die axiale Richtung beabstandet ist. Das dritte Fixierelement ist zumindest unter anderem an der Außenfläche der Hohlwelle angeordnet und erstreckt sich in die Umlaufrichtung. Die Geometrie des dritten Fixierelementes stimmt insbesondere mit der Geometrie des zweiten Fixierelementes überein. Durch das dritte Fixierelement ist die Stabilität des ersten Trägerelementes relativ zur Hohlwelle und damit auch die Stabilität des ersten Schneidelementes weiter erhöht.

Das erste Fixierelement und das zweite Fixierelement und insbesondere das dritte Fixierelement bilden eine Fixierelementgruppe zur Lagerung der ersten Gruppe von Schneidelementen. Bevorzugt umfasst die Häckseltrommel eine zweite gleichartig ausgebildete Fixierelementgruppe, die in die axiale Richtung versetzt, insbesondere gespiegelt, angeordnet ist und der Lagerung der zweiten Gruppe von Schneidelementen dient.

Vorzugsweise erstreckt sich das erste Trägerelement länglich parallel zur Schneide des ersten Schneidelementes. Die längliche Erstreckung ist so zu verstehen, dass die Haupterstreckungsrichtung des Trägerelementes mit der Erstreckungsrichtung der Schneide zusammenfällt. Insbesondere hat die Haupterstreckungsrichtung einen axialen und einen tangentialen Anteil. Die Länge des ersten Trägerelementes gleicht insbesondere zumindest im Wesentlichen der Länge des ersten Schneidelementes.

Die Länge einer Kontaktfläche zwischen dem ersten Trägerelement und dem ersten Schneidelement entspricht bevorzugt der Länge des ersten Trägerelementes. Durch diese Ausbildung des ersten Trägerelementes wird eine umfangreiche Stützung des ersten Schneidelementes erreicht, die eine Kollision, die von einer mangelnden Steifigkeit des ersten Schneidelementes zumindest mitverursacht ist, deutlich unwahrscheinlicher macht.

Bevorzugt ist das erste Trägerelement zumindest mit dem ersten Fixierelement mittels einer Schraube verschraubt. Deren Schraubendrehachse ist bevorzugt rechtwinklig zur Haupterstreckungsrichtung des ersten Trägerelementes angeordnet. Besonders bevorzugt schneidet die Schraubendrehachse die Drehachse nicht, sodass eine längere und damit belastbarere Schraube verwendbar ist, ohne dass sich dadurch der Durchmesser der Häckseltrommel erhöht. Insbesondere ist das erste Trägerelement mit einer Schraube pro Fixierelement (der jeweiligen Fixierelementgruppe) verschraubt. Durch diese Ausrichtung der Schraube lassen sich die im Betrieb entstehenden Kräfte zu einem besonders großen Ausmaß auf das zumindest eine Fixierelement übertragen. Alternativ kann die Schraubendrehachse in einer zur Drehachse rechtwinkligen Axialebene angeordnet sein.

Bevorzugt ist jedes Schneidelement von genau einem Trägerelement getragen. Dadurch ist sichergestellt, dass bei einer Kollision eines der Schneidelemente nur eines der Trägerelemente unmittelbar betroffen und notwendigerweise auszutauschen ist. Alternativ oder zusätzlich trägt jedes Trägerelement genau ein Schneidelement. Dadurch ist sichergestellt, dass bei einer Kollision eines der Schneidelemente nicht notwendigerweise weitere Schneidelemente zu demontieren sind und das notwendigerweise auszutauschende Trägerelement möglichst klein ist. Insbesondere bildet jedes Schneidelement mit dem das Schneidelement tragenden Trägerelement eine Schneideinheit.

Vorzugsweise weist das erste Fixierelement eine erste Trägerelementkontaktfläche auf, an der das erste Trägerelement anliegt. Das zweite Fixierelement weist eine zweite Trägerelementkontaktfläche auf, an der das erste Trägerelement anliegt. Die erste Trägerelementkontaktfläche ist relativ zur zweiten Trägerelementkontaktfläche in die Umlaufrichtung versetzt, insbesondere um die Drehachse verschwenkt, angeordnet. Das erste Trägerelement liegt dabei bevorzugt mit derselben Seite oder Fläche an der ersten und der zweiten Trägerelementkontaktfläche an. Durch die Positionierung der Trägerelementkontaktflächen zueinander wird sichergestellt, dass das erste Trägerelement entlang seiner gesamten Länge zumindest im Wesentlichen mit einer gleichbleibenden Stärke ausgebildet sein kann, die eine homogene Übertragung von Kräften auf die Fixierelemente sicherstellt. Die Trägerelementkontaktflächen haben bevorzugt eine identische Form.

Die erste Trägerelementkontaktfläche erstreckt sich insbesondere anteilig in die axiale Richtung. In einem zur Drehachse rechtwinkligen Querschnitt ist die erste Trägerelementkontaktfläche derart zu einer Radialen, die die erste Trägerelementkontaktfläche schneidet, angewinkelt ausgebildet, dass die erste Trägerelementkontaktfläche sich von einem ersten Kontaktflächenende der ersten Trägerelementkontaktfläche an der Drehachse nähert. Besonders bevorzugt nähert sich die erste Trägerelementkontaktfläche von dem ersten Kontaktflächenende bis zu einem zweiten Kontaktflächenende der ersten Trägerelementkontaktfläche der Drehachse. Die erste Trägerelementkontaktfläche ist in dem Querschnitt insbesondere frei von Ecken oder Winkeln und bevorzugt gradlinig abweichend von einer die erste Trägerelementkontaktfläche schneidenden Tangente ausgebildet. Die beschriebene Näherung ist insbesondere abgesehen von etwaigen sich parallel zur Schneide des ersten Schneidelementes erstreckenden Nuten zu verstehen. Die derart angewinkelte erste Trägerelementkontaktfläche ermöglicht eine verbesserte Kraftübertragung von dem ersten Trägerelement auf das erste Fixierelement und reduziert so die Wahrscheinlichkeit eines Kontaktes zwischen dem ersten und dem zweiten Trägerelement im Falle einer Kollision. Die Schraubendrehachse ist bevorzugt zumindest lokal rechtwinklig zur ersten Trägerelementkontaktfläche positioniert.

Besonders bevorzugt ist das zweite Kontaktflächenende bezogen auf die Umlaufrichtung vor dem ersten Kontaktflächenende angeordnet. In diesem Fall schiebt das erste Fixierelement das erste Trägerelement im Betrieb in die Umlaufrichtung. So kann die Kraftübertragung im Falle der Kollision besonders zuverlässig und ohne Überbeanspruchung der Schraubverbindung erfolgen. Als Kontaktflächenende ist insbesondere nicht nur der äußerste Punkt der ersten Trägerelementkontaktfläche in dem Querschnitt zu verstehen, sondern ein endseitiger Bereich der ersten Trägerelementkontaktfläche zu verstehen.

Vorzugsweise ist die Eingangswelle an einer Eingangswellenkontaktfläche eines Drehmomentaufnahmeabschnittes des ersten Fixierelementes angeordnet. In diesem Fall ist die Eingangswelle bevorzugt nur an dem ersten Fixierelement und nicht an der Hohlwelle angeordnet. Die Eingangswellenkontaktfläche ist insbesondere rechtwinklig zur Drehachse ausgebildet. Die Eingangswelle ist vorzugsweise mit dem ersten Fixierelement verschraubt. Durch diese Anordnung der Eingangswelle lassen sich Schweißnähte reduzieren und wird insbesondere ein in den Hohlraum der Hohlwelle einzuschweißender Wellendrehmomentaufnahmeabschnitt überflüssig. Die Eingangswelle umfasst bevorzugt ein als Flansch ausgebildetes Drehmomentabgabeelement, das an der Eingangswellenkontaktfläche anliegt. Insbesondere weist die Häckseltrommel ein weiteres Fixierelement mit einer weiteren Eingangswellenkontaktfläche auf, an der die Eingangswelle zusätzlich angeordnet ist.

Vorzugsweise hat der Drehmomentaufnahmeabschnitt oder die Eingangswellenkontaktfläche einen kleineren Innendurchmesser als die Hohlwelle. Dadurch wird erreicht, dass das Drehmoment von der Eingangswelle auf das erste Fixierelement in einem Durchmesserbereich übertragen wird, der unterhalb des Innendurchmessers der Hohlwelle liegt und somit den Bauraum der Eingangswelle reduziert. Alternativ oder zusätzlich ist der Drehmomentaufnahmeabschnitt oder die Eingangswellenkontaktfläche in die axiale Richtung versetzt zur Hohlwelle angeordnet. Das erste Fixierelement erstreckt sich also in einem Längsschnitt durch die Hohlwelle an dessen Stirnseite entlang in Richtung der Drehachse. Dadurch lässt sich der von der Häckseltrommel beanspruchte Bauraum verringern. Zur Montage der Häckseltrommel ist das erste Fixierelement zur Verwirklichung der vorgenannten beiden Merkmale insbesondere in die axiale Richtung auf die Hohlwelle aufzuschieben, bis der Drehmomentaufnahmeabschnitt an die Stirnseite der Hohlwelle anstößt. Der Drehmomentaufnahmeabschnitt weist bevorzugt eine zentrale Bohrung in Richtung der Drehachse auf, durch die sich besonders bevorzugt die Eingangswelle hindurcherstreckt.

Die vorstehend und/oder nachfolgend mit Bezug auf das erste Trägerelement beschriebenen Merkmale sind bevorzugt auch mit Bezug auf das zweite Trägerelement oder sämtliche Trägerelemente zu verstehen. Die vorstehend und/oder nachfolgend mit Bezug auf das erste Fixierelement, insbesondere die erste Trägerelementkontaktfläche, beschriebenen Merkmale sind bevorzugt auch mit Bezug auf das zweite/dritte Fixierelement, insbesondere die zweite Trägerelementkontaktfläche, oder sämtliche Fixierelemente, insbesondere Trägerelementkontaktflächen, zu verstehen.

Erfindungsgemäß wird die Aufgabe zum Zweiten gelöst durch ein Verfahren zur Herstellung einer Häckseltrommel für einen Feldhäcksler. Das Verfahren dient insbesondere zur Herstellung einer vor- und/oder nachbeschriebenen Häckseltrommel. Gemäß dem Verfahren wird zuerst zumindest ein Fixierelement an einer Außenfläche einer Hohlwelle befestigt. Hierzu wird das Fixierelement insbesondere mit der Hohlwelle verschweißt. Anschließend wird das Fixierelement zumindest teilweise spanend bearbeitet. Hierzu wird das Fixierelement insbesondere gefräst. Anschließend wird zumindest ein Trägerelement lösbar an dem Fixierelement befestigt. Hierzu wird das Trägerelement insbesondere mit dem Fixierelement verschraubt. Zeitlich unabhängig von den vorgenannten Schritten wird an dem Trägerelement ein Schneidelement mit einer Schneide angeordnet. Dadurch, dass die spanende Bearbeitung erst nach dem Fügen des Fixierelementes an der Hohlwelle stattfindet, lassen sich Abweichungen, insbesondere durch einen Schweißverzug verursachte Abweichungen, der tatsächlichen Häckseltrommelgeometrie von der beabsichtigten Häckseltrommelgeometrie verringern. Hierdurch wird ein sauberer Umlauf der Häckseltrommel erreicht und das Kollisionsrisiko verringert. Außerdem wird eine Unwucht der Häckseltrommel reduziert, die deren Lebensdauer empfindlich verkürzen kann.

Bevorzugt wird das Fixierelement zur Herstellung einer Trägerelementkontaktfläche spanend bearbeitet, an die das Trägerelement angelegt wird, bevor es lösbar befestigt wird. Die Trägerelementkontaktfläche ist maßgeblich für die Positionierung des Schneidelementes. Insbesondere ist die Trägerelementkontaktfläche von wesentlicher Bedeutung für die Einstellung des richtigen Abstandes der Schneide zur Drehachse. Bei einem zu großen Abstand der Schneide von der Drehachse ist das Kollisionsrisiko massiv erhöht. Insofern ist die spanende Herstellung der Trägerelementkontaktfläche nach dem Fügen des Fixierelementes von großer Bedeutung für die Vermeidung von Kollisionen. Die exakte Positionierung der Schneidelemente ist außerdem vorteilhaft, da sie es erlaubt, ein Schleifen der Schneiden zu verkürzen und auf einen minimalen Materialabtrag zu begrenzen.

Vorzugsweise wird das Fixierelement zur Herstellung einer Eingangswellenkontaktfläche eines Drehmomentaufnahmeabschnittes des Fixierelementes spanend bearbeitet, an die anschließend eine Eingangswelle angelegt wird, bevor sie insbesondere an dem Fixierelement befestigt wird. Die Eingangswelle erstreckt sich axial von der Eingangswellenkontaktfläche weg und dient zur Übertragung eines Drehmomentes von einem Antriebselement auf das Fixierelement. Durch die spanende Bearbeitung der Eingangswellenkontaktfläche lassen sich Spannungen zwischen der Eingangswelle und dem Fixierelement und damit unnötige Belastungen der Drehlager der Häckseltrommel vermeiden, die ein erhöhtes Ausfallrisiko verursachten.

Optional wird das Fixierelement auch vor seiner Befestigung an der Außenfläche der Hohlwelle bereits teilweise spanend bearbeitet. Dadurch wird insbesondere bereits eine Durchgangsbohrung hergestellt.

Vorzugsweise werden zwei identisch ausgebildete Fixierelemente zueinander in die axiale Richtung versetzt an der Außenfläche der Hohlwelle befestigt. Anschließend werden die Fixierelemente abweichend voneinander spanend bearbeitet. Anschließend wird ein erstes Trägerelement lösbar an dem einen der beiden Fixierelemente befestigt. Ein weiteres Trägerelement wird anschließend relativ zum ersten Trägerelement zumindest in die axiale Richtung versetzt positioniert lösbar an dem anderen der beiden Fixierelemente befestigt. An den Trägerelementen ist jeweils ein Schneidelement mit einer Schneide angeordnet. Die Schneiden sind dabei zu der axialen Richtung insbesondere derart gegensinnig angewinkelt, dass die auf die axiale Richtung bezogen voneinander abgewandten Enden der Schneiden den jeweils gegenüberliegenden Enden in die Umlaufrichtung nachlaufen. Die Fixierelemente werden also derartig abweichend voneinander spanend bearbeitet, dass die Trägerelemente darauf in unterschiedlicher Orientierung lösbar zu befestigen sind. Insbesondere sind die Trägerelementkontaktflächen der Fixierelemente abgesehen von einem axialen Versatz und einer Verschwenkung zueinander um die Drehachse gespiegelt zu einer zur Drehachse rechtwinkligen Spiegelebene ausgebildet. Dass trotzdem zunächst identisch ausgebildete Fixierelemente an der Hohlwelle befestigt werden, erlaubt die Verwendung einheitlicher Werkzeuge für das Urformen der Fixierelemente, wodurch der Fertigungsaufwand deutlich reduziert ist.

Vor der spanenden Bearbeitung sind die Fixierelemente in einer Axialansicht bevorzugt entlang der Umlaufrichtung sägezahnförmig ausgebildet. Die Fixierelemente weisen von der Drehachse abgewandte Oberflächen auf, die sich abschnittsweise eben parallel zur Drehachse erstrecken. Die beiden Fixierelemente umfassen das Fixierelement mit dem Drehmomentaufnahmeabschnitt oder sind jeweils in die axiale Richtung davon beabstandet. Besonders bevorzugt werden vier oder sechs Fixierelemente an der Außenfläche der Hohlwelle befestigt. Vor der Befestigung der Fixierelemente an der Hohlwelle werden die Fixierelemente insbesondere durch Metallguss gegossen und insbesondere bereits vorbereitend spanend bearbeitet.

Die vor- und/oder nachbeschriebene Häckseltrommel ist insbesondere erhalten durch das vor- und/oder nachbeschriebene Verfahren.

Weitere Einzelheiten und Vorteile der Erfindung sind den nachfolgend schematisch dargestellten Figuren zu entnehmen. Es zeigen:
- Fig. 1: eine Fixiereinrichtung einer ersten erfindungsgemäßen Häckseltrommel in einer perspektivischen Darstellung,
- Fig. 2: die Fixiereinrichtung aus Fig. 1 in einer Radialansicht,
- Fig. 3: die Fixiereinrichtung aus Fig. 1 in einer Axialansicht,
- Fig. 4: die Fixiereinrichtung aus Fig. 1 in einem Längsschnitt,
- Fig. 5: ein Rohling der Fixiereinrichtung aus Fig. 1 vor einer spanenden Bearbeitung,
- Fig. 6: eine Fixiereinrichtung einer zweiten erfindungsgemäßen Häckseltrommel in einer perspektivischen Darstellung,
- Fig. 7: eine vereinfachte Querschnittsdarstellung der zweiten Häckseltrommel bei Ausblendung der Fixierelemente,
- Fig. 8: die zweite Häckseltrommel in einer perspektivischen Darstellung,
- Fig. 9: die zweite Häckseltrommel in einer entlang der Schnittlinie B - B in Fig. 8 geschnittenen Darstellung,
- Fig. 10: einen in der Fig. 9 gekennzeichneten Teil A in einer Detaildarstellung,
- Fig. 11: die zweite Häckseltrommel in einer Radialansicht,
- Fig. 12: die zweite Häckseltrommel in einer entlang der Schnittlinie C - C in Fig. 8 geschnittenen Darstellung,
- Fig. 13: einen in der Fig. 12 gekennzeichneten Teil D in einer Detaildarstellung,
- Fig. 14: die zweite Häckseltrommel in einer entlang der Schnittlinie F - F in Fig. 11 geschnittenen Darstellung,
- Fig. 15: einen in der Fig. 14 gekennzeichneten Teil E in einer Detaildarstellung,
- Fig. 16: eine Fig. 15 entsprechende Detaildarstellung einer dritten erfindungsgemäßen Häckseltrommel,
- Fig. 17: eine Fig. 15 entsprechende Detaildarstellung einer vierten erfindungsgemäßen Häckseltrommel,
- Fig. 18: die zweite Häckseltrommel während ihrer Montage nach einem ersten Montageschritt,
- Fig. 19: die zweite Häckseltrommel während ihrer Montage nach einem zweiten Montageschritt,
- Fig. 20: die zweite Häckseltrommel während ihrer Montage nach einem dritten Montageschritt,
- Fig. 21: die zweite Häckseltrommel während ihrer Montage nach einem vierten Montageschritt,
- Fig. 22: die zweite Häckseltrommel während ihrer Montage nach einem fünften Montageschritt,
- Fig. 23a bis 23f: ein Gegenträgerelement der zweiten Häckseltrommel in unterschiedlichen Ansichten,
- Fig. 24a bis 24e: ein Trägerelement der zweiten Häckseltrommel in unterschiedlichen Ansichten.

Gleiche oder ähnlich wirkende Teile sind, sofern sachdienlich, mit identischen Bezugsziffern versehen. Die einzelnen technischen Merkmale der nachfolgend beschriebenen Ausführungsformen der Erfindung können auch anders als beschrieben kombiniert zu erfindungsgemäßen Weiterbildungen führen.

Die Figuren zeigen unterschiedliche Varianten einer Häckseltrommel 2 für einen nicht dargestellten Feldhäcksler. Die Häckseltrommel 2 ist jeweils zu einem Umlauf in eine Umlaufrichtung UR um eine Drehachse DA ausgebildet. Die Häckseltrommeln 2 umfassen eine Fixiereinrichtung 50. Die Fixiereinrichtung 50 umfasst eine Eingangswelle 4 und eine ortsfest dazu angeordnete Hohlwelle 6.

Die Fixiereinrichtung 50 der ersten erfindungsgemäßen Häckseltrommel 2 umfasst vier Fixierelemente 10, 12, 52. Die Fixierelemente 10, 12, 52 sind im Wesentlichen ringförmig ausgebildet und an einer Außenfläche 8 der Hohlwelle 6 angeordnet. Die Fixierelemente 10, 12, 52 erstreckten sich in die Umlaufrichtung UR um den gesamten Umfang der Hohlwelle 6. Die Fixierelemente 10, 12, 52 sind in eine axiale Richtung AR versetzt auf der Hohlwelle 6 angeordnet, wobei die axiale Richtung AR bezogen auf die Drehachse DA zu verstehen ist. Ein zweites Fixierelement 12 ist zwischen einem ersten Fixierelement 10 und weiteren Fixierelementen 52 angeordnet.

Die zweite erfindungsgemäße Häckseltrommel 2 weist gegenüber der ersten erfindungsgemäßen Häckseltrommel 2 zwei weitere Fixierelemente 14, 52 auf, die wie das zweite Fixierelement 12 ausgebildet sind und benachbart zu den äußeren Fixierelementen 10, 52 auf der Hohlwelle 6 angeordnet sind. Mit der Ausnahme der äußeren Fixierelemente 10, 52 sind die Fixierelemente 14, 12, 52 geometrische identisch ausgebildet und lediglich derart verschieden zueinander positioniert, dass sie in die axiale Richtung AR zueinander versetzt und geringfügig um die Drehachse DA zueinander verschwenkt befestigt sind.

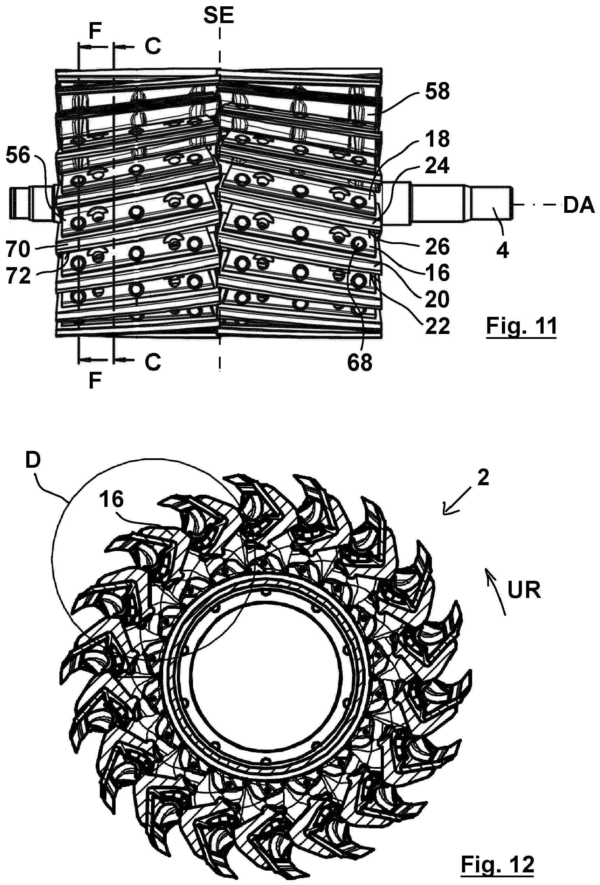

Die Häckseltrommeln 2 weisen jeweils zwei gleichartig ausgebildete Sätze von Trägerelementen 16, 18, 19, 56 und Schneidelemente 20, 24, 27, 70 auf. Die Trägerelemente 16, 18, 19, 56 und die Schneidelemente 20, 24, 27, 70 sind einander 1:1 zugeordnet und bilden gemeinsam Schneideinheiten. Einem ersten der Sätze gehört ein erstes Trägerelement 16, ein zweites Trägerelement 18 und ein drittes Trägerelement 19 sowie ein erstes Schneidelement 20, ein zweites Schneidelement 24 und ein drittes Schneidelement 27 an. Die Schneidelemente 20, 24, 27 weisen jeweils eine Schneide 22, 26, 29 auf, die sich in der Radialansicht über das erste und das zweite Fixierelement 10, 12 und insbesondere das dritte Fixierelement 14 hinwegerstreckt. Einem zweiten der Sätze gehört u.a. ein weiteres Trägerelement 56 und ein weiteres Schneidelement 70 mit einer Schneide 72 an, die sich in der Radialansicht über die weiteren Fixierelemente 52 hinwegerstreckt. Die Sätze grenzen im Bereich einer Spiegelebene SE in der axialen Richtung AR aneinander an, ohne sich zu berühren (Fig. 11). Jeder Satz umfasst bei der ersten und der zweiten erfindungsgemäßen Häckseltrommel 2 18 Trägerelemente 16, 18, 19, 56 und Schneidelemente 20, 24, 27. Bei der dritten erfindungsgemäßen Häckseltrommel 2 umfasst jeder Satz neun Trägerelemente 16, 18, 19, 56. Bei der vierten erfindungsgemäßen Häckseltrommel 2 umfasst jeder Satz sechs Trägerelemente 16, 18, 19, 56. Die nachfolgenden Ausführungen sind exemplarisch auf den ersten Satz bezogen.

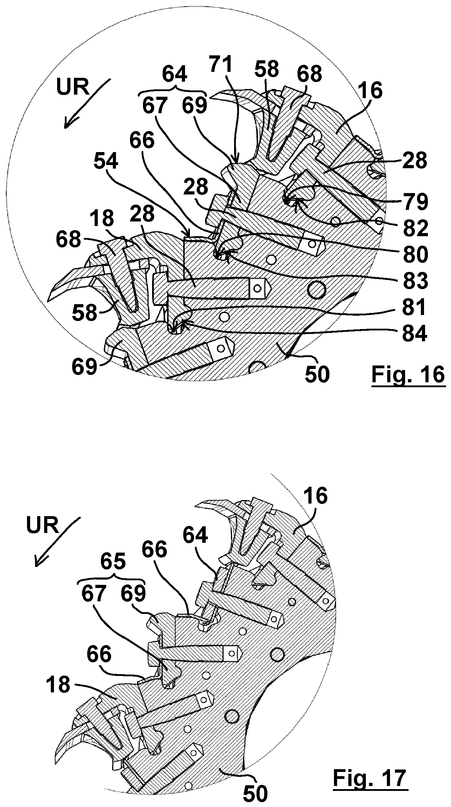

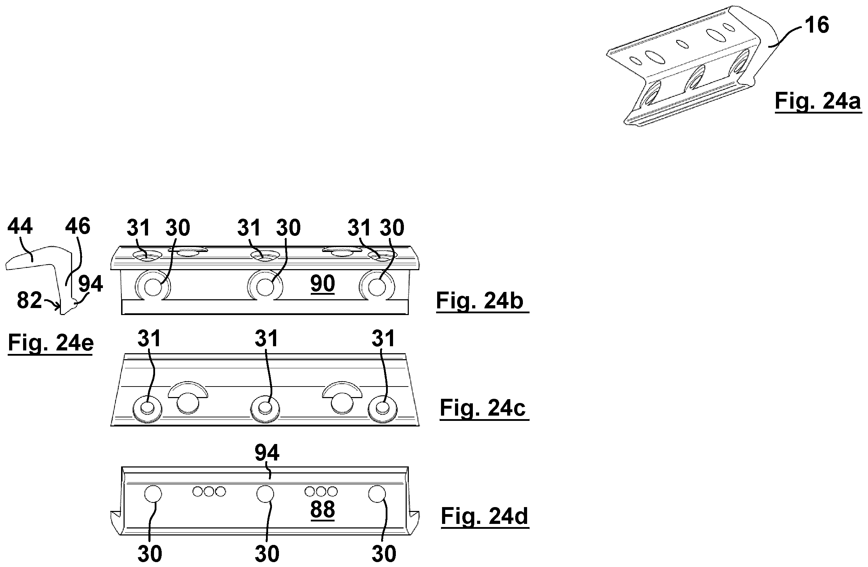

Jede der Häckseltrommeln 2 umfasst ein erstes Trägerelement 16, ein zweites Trägerelement 18 und ein drittes Trägerelement 19, die in die Umlaufrichtung UR benachbart zueinander angeordnet sind. Die Trägerelemente 16, 18, 19 sind mit dem ersten Fixierelement 10, dem zweiten Fixierelement 12 und insbesondere dem dritten Fixierelement 14 jeweils mittels einer Schraube 28 lösbar verschraubt (Fig. 16). Für jede Schraube 28 weisen die Trägerelemente 16, 18, 19 eine Bohrung 30 auf. Die Trägerelemente 16, 18, 19 weisen weitere Bohrungen 31 für Schrauben 68 zur Festlegung der Schneidelemente 20, 24, 27 an den Trägerelementen 16, 18, 19 auf (Fig. 24a ff.).

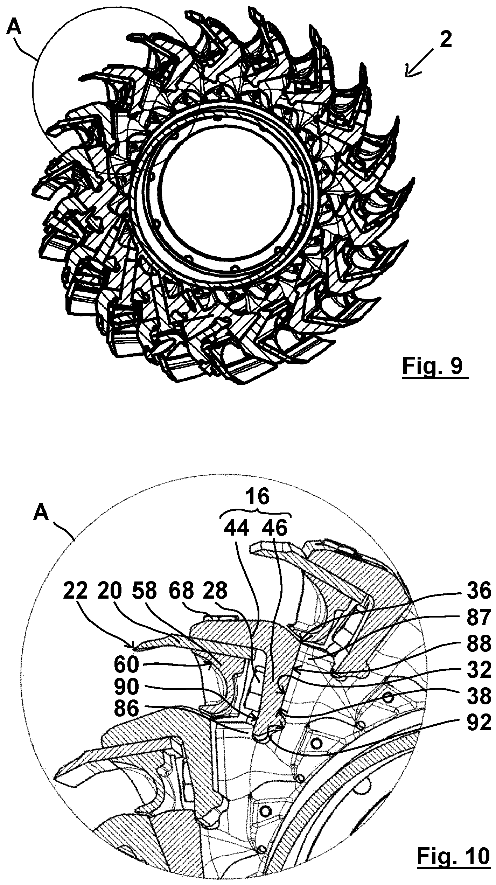

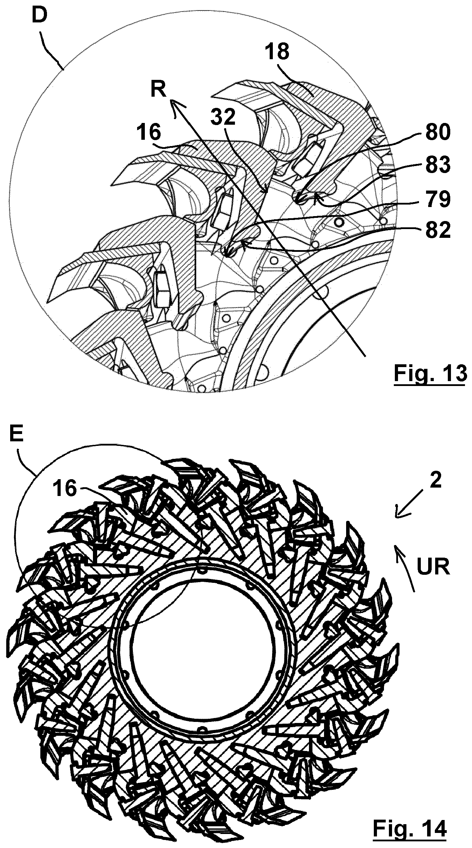

Die Fixierelemente 10, 12, 14 weisen pro Trägerelement 16, 18, 19 jeweils eine Trägerelementkontaktfläche 32, 33, 34 auf, an der das jeweilige Trägerelement 16, 18, 19 anliegt. Die Trägerelementkontaktflächen 32, 33, 34 für das erste Trägerelement 16 sind in die Umlaufrichtung UR versetzt zueinander angeordnet. Dadurch erstrecken sich die Trägerelemente 16, 18 19 und die Schneidelemente 20, 24, 27 länglich angewinkelt zur axialen Richtung AR, ohne einen entlang ihrer Länge variierenden Querschnitt haben zu müssen. Die Trägerelementkontaktflächen 32, 33, 34 sind in einem zur Drehachse DA rechtwinkligen Querschnitt zu einer sich schneidenden Radialen R angewinkelt ausgebildet (Fig. 13). Konkret nähern sich die Trägerelementkontaktflächen 32, 33, 34 von einem ersten Kontaktflächenende 36 bis zu einem zweiten Kontaktflächenende 38 zumindest ungeachtet einer Nut 92 der Drehachse DA, wobei das zweite Kontaktflächenende 38 in die Umlaufrichtung UR zum ersten Kontaktflächenende 36 versetzt angeordnet ist (Fig. 10).

Die Trägerelemente 16, 18, 19 weisen jeweils einen Eingreifabschnitt 82, 83, 84 auf, mit dem sie in Eingreifausnehmungen 79, 80, 81 der Fixiereinrichtung 50 eingreifen. Dasselbe gilt für Abdeckelemente 64, 65, durch die bei der dritten und vierten Häckseltrommel 2 eine Hälfte bzw. zwei Drittel der Trägerelemente16, 18, 19 ersetzt sind (Fig. 16 u. 17). Die Fixiereinrichtung 50 bildet ein Hauptlager 87 und ein Gegenlager 86 aus. Die Trägerelemente 16, 18, 19 weisen im Querschnitt (Fig. 10) einen ersten Schenkel 44, an dem das jeweilige Schneidelement 20, 24, 27 angeordnet ist, und einen zweiten Schenkel 46 auf, der den jeweiligen Eingreifabschnitt 82, 83, 84 ausbildet. Der zweite Schenkel 46 ist zum ersten Schenkel 44 im Querschnitt angewinkelt. Das Hauptlager 87 liegt an einer ersten Seite 88 des zweiten Schenkels 46 an. Das Gegenlager 86 liegt an einer zweiten Seite 90 des zweiten Schenkels 46 an (Fig. 10). Das Gegenlager 86 ist dabei mit Bezug auf das Trägerelement 16, 18, 19 in die Umlaufrichtung UR vorlaufend, das Hauptlager 87 ist in die Umlaufrichtung UR nachlaufend ausgebildet. Der erste Schenkel 44 liegt derart von außen an dem am Trägerelement 16, 18, 19 angeordneten Schneidelement 20, 24, 27 an, dass die Radiale R das Schneidelement 20, 24, 27 zwischen dem ersten Schenkel 44 und der Drehachse DA schneidet.

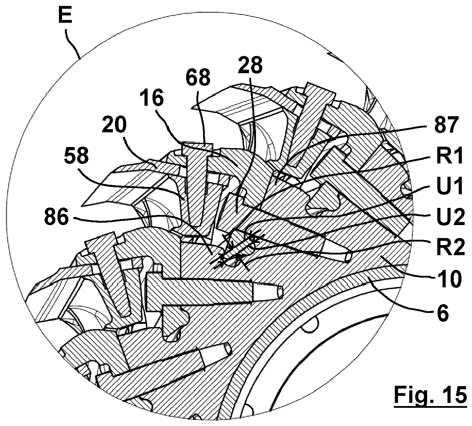

Die Eingreifausnehmungen 79, 80, 81 haben im Querschnitt bei einem ersten Radius R1 eine erste Erstreckung U1 in die Umlaufrichtung UR. Bei einem zweiten Radius R2, der kleiner ist als der erste Radius R1, haben die Eingreifausnehmungen 79, 80, 81 eine zweite Erstreckung U2 in die Umlaufrichtung UR, die größer ist als die erste Erstreckung U1 (Fig. 15). Die Trägerelemente 16, 18, 19 weisen einen im Querschnitt sichtbaren Vorsprung 94 auf, der sich länglich, parallel zur Schneide 22, 26, 29 des am Trägerelement 16, 18, 19 angeordneten Schneidelementes 20, 24, 27 erstreckt. Der Vorsprung 94 erstreckt sich in die Nuten 92 der Fixierelemente 10, 12, 14. Die Nut 92 ist versetzt zur Schraube 28 angeordnet.

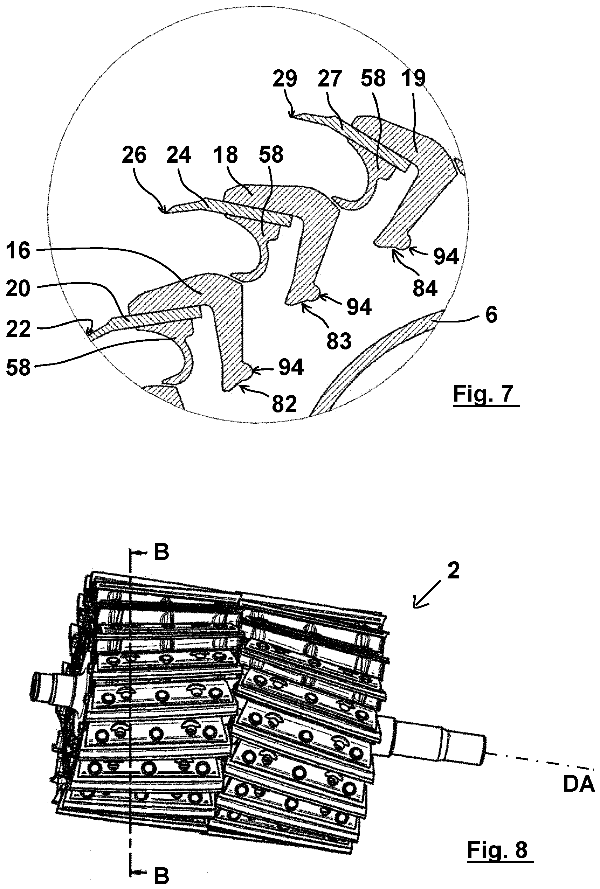

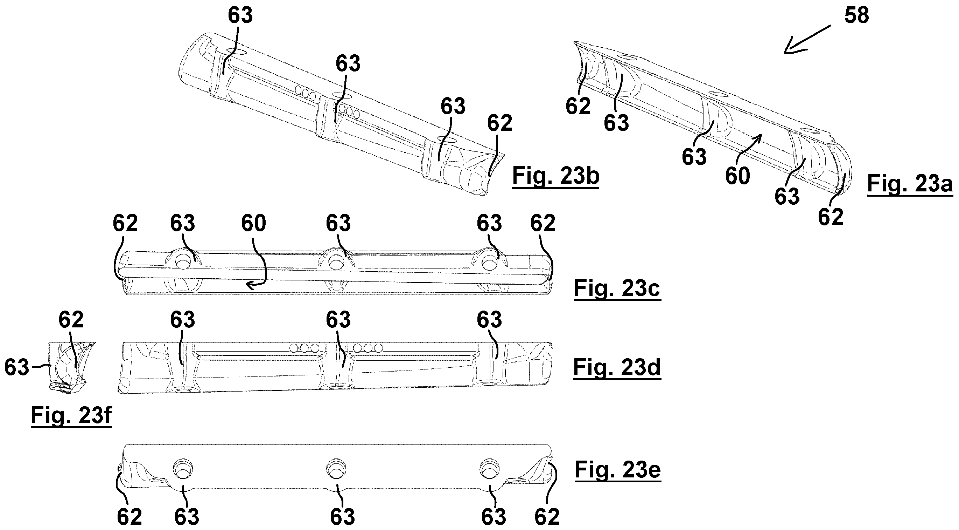

Die Schneidelemente 20, 24, 27 sind jeweils zwischen einem der Trägerelemente 16, 18, 19 und einem Gegenträgerelement 58 angeordnet (Fig. 7). Im Querschnitt läuft das Gegenträgerelement 58 in Richtung der Schneide 22, 26, 29 des Schneidelementes 20, 24, 27, an dem sie anliegen, spitz zu. Die Gegenträgerelemente 58 haben eine bogenförmige Leitfläche 60 zur Umlenkung geschnittenen Erntegutes um ca. 180°. Die Gegenträgerelemente 58 weisen einen an ihren axialen Enden relativ zur Leitfläche 60 vorstehenden Begrenzungsabschnitt 62 auf. Zwischen den Begrenzungsabschnitten 62 ist pro Fixierelement 10, 12, 14 ein Schraubenaufnahmeabschnitt 63 angeordnet (Fig. 23a ff.).

Die Abdeckelemente 64, 65 haben bezogen auf die Drehachse DA eine geringere radiale Erstreckung als die Trägerelemente 16, 18, 19. Auf den Abdeckelementen 64, 65 sind Abdeckzusatzelemente 66 angeordnet, die eine von der Drehachse DA abgewandte Leitfläche 54 aufweisen und sich von dem jeweiligen Abdeckelement 64, 65 zum in die Umlaufrichtung UR vorlaufenden Abdeckelement 65 oder Trägerelement 18 erstrecken. Zumindest ein Teil der Abdeckelemente 64, 65 weist im Querschnitt einen Abdeckschenkel 67 auf, der dem zweiten Schenkel 46 der Trägerelemente 16, 18, 19 gleicht. An den Abdeckschenkel 67 grenzt ein gegenüber vom zweiten oder dritten Eingreifabschnitt 83, 84 angeordneter Vorsprungsabschnitt 69 an. Der Vorsprungsabschnitt 69 steht von dem Abdeckschenkel 67 in die Umlaufrichtung UR hervor und hat eine von der Drehachse DA abgewandte Vorsprungsoberfläche 71. Die Vorsprungsoberfläche 71 schließt sich an die Leitfläche 54, 60 an.

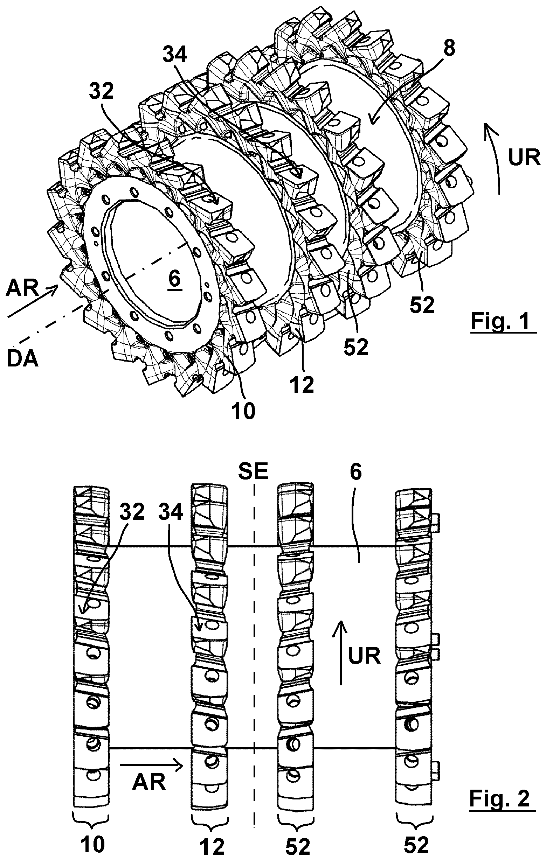

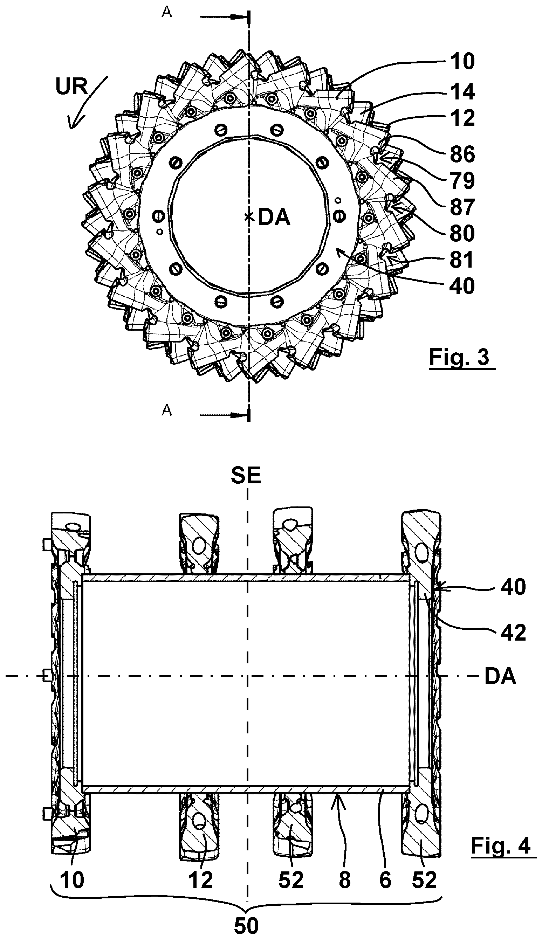

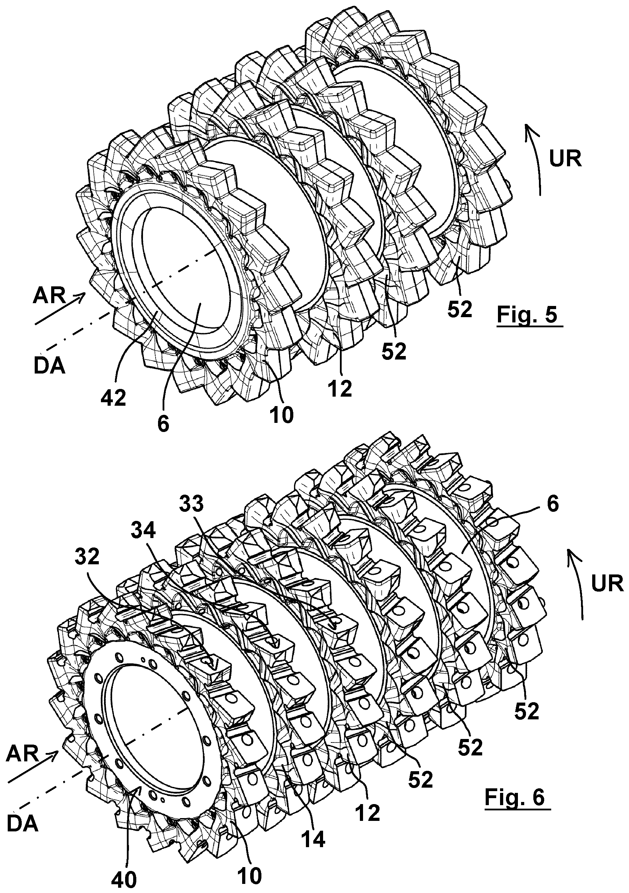

Die Häckseltrommeln 2 werden folgendermaßen hergestellt. Zunächst werden die Fixierelemente 10, 12, 14 an der Außenfläche 8 der Hohlwelle 6 angeschweißt (Fig. 5). Anschließend werden die Fixierelemente 10, 12, 14 spanend bearbeitet (Fig. 1 bis 4 und 6). Dadurch werden die Trägerelementkontaktflächen 32, 33, 34 hergestellt. Außerdem wird durch die spanende Bearbeitung an einem Drehmomentaufnahmeabschnitt 40 des ersten Fixierelementes 10 eine Eingangswellenkontaktfläche 42 hergestellt, an der anschließend die Eingangswelle 4 angelegt wird (Fig. 8 und 11). Der Drehmomentaufnahmeabschnitt 40 hat einen kleineren Innendurchmesser als die Hohlwelle 6 und ist in die axiale Richtung AR versetzt zur Hohlwelle 6 angeordnet. Durch die spanende Bearbeitung nach dem Verschweißen der Fixierelemente 10, 12, 14 haben zumindest abgesehen von den äußeren Fixierelementen 10, 52 die Fixierelemente 12, 14, 52 eine identische Rohform, wenn sie verschweißt werden (Fig. 5).

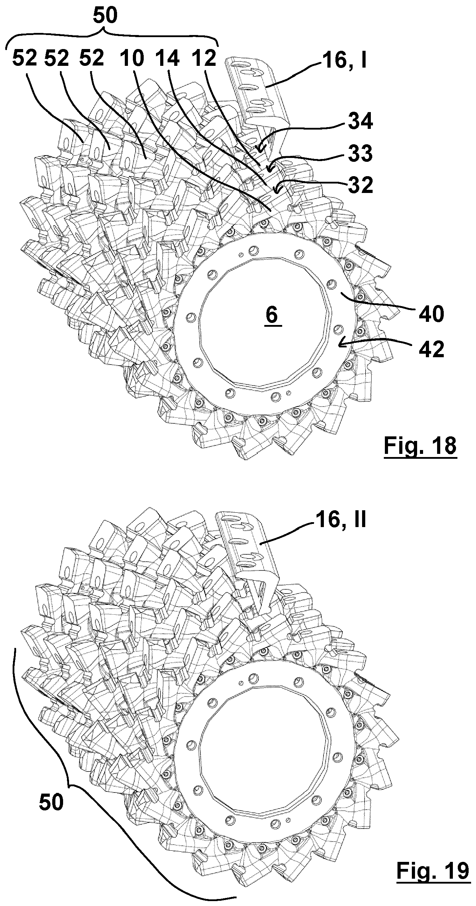

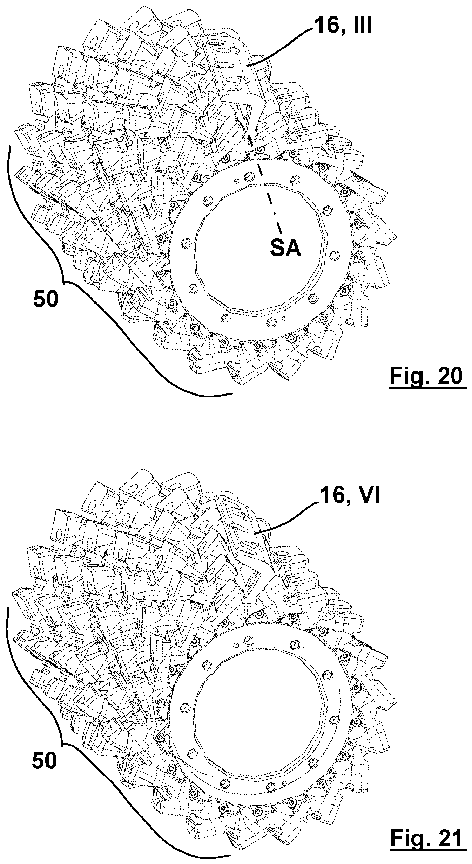

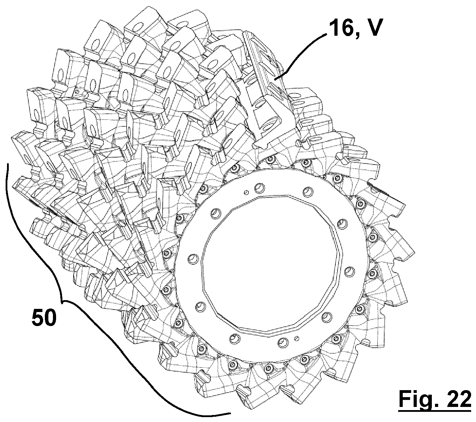

Die Trägerelemente 16, 18, 19 werden nach der spanenden Bearbeitung der Fixierelemente 10, 12, 14 daran angeordnet. Hierzu werden die Trägerelemente 16, 18, 19 mit ihren Eingreifabschnitten 82, 83, 84 in die Eingreifausnehmungen 79, 80, 81 eingehebelt. Dazu werden die Trägerelemente 16, 18, 19 gemäß fünf Schritten I bis V relativ zur Fixiereinrichtung 50 bewegt und an den Fixierelementen 10, 12, 14 anliegend um eine Schwenkachse SA geschwenkt (Fig. 18 - 22). Dabei greifen die Vorsprünge 94 in die Nuten 92 ein. Die Schwenkachse SA verläuft jeweils parallel zur Haupterstreckungsrichtung der Trägerelemente 16, 18, 19. Nach dem Einhebeln der Trägerelemente 16, 18, 19 werden diese an den Fixierelementen 10, 12, 14 befestigt, insbesondere verschraubt. Anschließend werden die Schneidelemente 20, 24, 27 mit den Trägerelementen 16, 18, 19 verschraubt.

Die Hohlwelle 6 und der Drehmomentaufnahmeabschnitt 40 weisen sich rund um die Drehachse DA erstreckende Innenseiten auf, die in den Figuren teilweise vereinfacht eckig gezeigt sind. Die Fixierelemente 10, 12, 14, 52 haben eine komplexe Geometrie, die insbesondere durch Linien geringerer Stärke angedeutet ist. Die Linien geringerer Stärke sind nicht notwendigerweise als Bauteilkonturen zu verstehen.

## Patentansprüche

1. Häckseltrommel (2) für einen Feldhäcksler, die zu einem Umlauf in eine Umlaufrichtung (UR) um eine Drehachse (DA) ausgebildet ist und eine Eingangswelle (4), eine zur Eingangswelle (4) ortsfest angeordnete Hohlwelle (6), zumindest ein erstes Fixierelement (10), das zumindest unter anderem an einer Außenfläche (8) der Hohlwelle (6) angeordnet ist und sich in die Umlaufrichtung (UR) erstreckt, ein erstes Trägerelement (16), das an dem Fixierelement (10) lösbar befestigt ist und an dem ein erstes Schneidelement (20) mit einer sich in einer Radialansicht zur Umlaufrichtung (UR) angewinkelt über das erste Fixierelement (10) hinwegerstreckenden Schneide (22) zum Schneiden von Erntegut angeordnet ist, und ein zweites Trägerelement (18) aufweist, das an dem ersten Fixierelement (10) lösbar befestigt ist und an dem ein zum ersten Schneidelement (20) in die Umlaufrichtung (UR) benachbartes, zweites Schneidelement (24) mit einer sich in der Radialansicht zur Umlaufrichtung (UR) angewinkelt über das Fixierelement (10) hinwegerstreckenden Schneide (26) zum Schneiden von Erntegut angeordnet ist, **dadurch gekennzeichnet, dass** das erste Trägerelement (16) vom zweiten Trägerelement (18) in die Umlaufrichtung (UR) beabstandet ist.

2. Häckseltrommel nach Anspruch 1, **dadurch gekennzeichnet, dass** das erste Trägerelement (16) an einem zweiten Fixierelement (12) lösbar befestigt ist, das zumindest unter anderem an der Außenfläche (8) der Hohlwelle (6) angeordnet ist, sich in die Umlaufrichtung (UR) erstreckt und zumindest teilweise in eine bezogen auf die Drehachse (DA) der Häckseltrommel axiale Richtung (AR) von dem ersten Fixierelement (10) beabstandet ist.

3. Häckseltrommel nach einem der vorhergehenden Ansprüche, **dadurch gekennzeichnet, dass** das erste Trägerelement (16) an einem dritten Fixierelement (14) lösbar befestigt ist, das zumindest unter anderem an der Außenfläche (8) der Hohlwelle (6) angeordnet ist, sich in die Umlaufrichtung (UR) erstreckt und in der axialen Richtung (AR) zwischen dem ersten Fixierelement (10) und dem zweiten Fixierelement (12) angeordnet ist, von denen es jeweils zumindest teilweise in die axiale Richtung (AR) beabstandet ist.

4. Häckseltrommel nach einem der vorhergehenden Ansprüche, **dadurch gekennzeichnet, dass** sich das erste Trägerelement (16) länglich parallel zur Schneide (22) des ersten Schneidelementes (20) erstreckt.

5. Häckseltrommel nach einem der vorhergehenden Ansprüche, **dadurch gekennzeichnet, dass** jedes Schneidelement (20, 24) von genau einem Trägerelement (16, 18) getragen ist und/oder jedes Trägerelement (16, 18) genau ein Schneidelement (20, 24) trägt.

6. Häckseltrommel nach einem der vorhergehenden Ansprüche, **dadurch gekennzeichnet, dass** das erste Trägerelement (16) zumindest mit dem ersten Fixierelement (10) mittels einer Schraube (28) verschraubt ist, deren Schraubendrehachse rechtwinklig zur Haupterstreckungsrichtung des ersten Trägerelementes (16) angeordnet ist.

7. Häckseltrommel nach einem der vorhergehenden Ansprüche, **dadurch gekennzeichnet, dass** eine erste Trägerelementkontaktfläche (32) des ersten Fixierelementes (10), an der das erste Trägerelement (16) anliegt, relativ zu einer zweiten Trägerelementkontaktfläche (34) des zweiten Fixierelementes (12), an der das erste Trägerelement (16) anliegt, in die Umlaufrichtung (UR) versetzt angeordnet ist.

8. Häckseltrommel nach einem der vorhergehenden Ansprüche, **gekennzeichnet durch** eine erste Trägerelementkontaktfläche (32) des ersten Fixierelementes (10), an der das erste Trägerelement (16) anliegt und die in einem zur Drehachse (DA) rechtwinkligen Querschnitt derart zu einer die erste Trägerelementkontaktfläche (32) schneidenden Radialen (R) angewinkelt ausgebildet ist, dass die erste Trägerelementkontaktfläche (32) sich von einem ersten Kontaktflächenende (36) bis zu einem zweiten Kontaktflächenende (38) der Drehachse (DA) nähert.

9. Häckseltrommel nach einem der vorhergehenden Ansprüche, **dadurch gekennzeichnet, dass** das zweite Kontaktflächenende (38) bezogen auf die Umlaufrichtung (UR) vor dem ersten Kontaktflächenende (36) angeordnet ist.

10. Häckseltrommel nach einem der vorhergehenden Ansprüche, **dadurch gekennzeichnet, dass** die Eingangswelle (4) an einer Eingangswellenkontaktfläche (42) eines Drehmomentaufnahmeabschnittes (40) des ersten Fixierelementes (10) angeordnet ist.

11. Häckseltrommel nach einem der vorhergehenden Ansprüche, **dadurch gekennzeichnet, dass** der Drehmomentaufnahmeabschnitt (40) einen kleineren Innendurchmesser hat als die Hohlwelle (6) und/oder in die axiale Richtung (AR) versetzt zur Hohlwelle (6) angeordnet ist.

12. Verfahren zur Herstellung einer Häckseltrommel (2) für einen Feldhäcksler, insbesondere einer Häckseltrommel (2) nach einem der Ansprüche 1 bis 11, wobei
- zumindest ein Fixierelement (10) an einer Außenfläche (8) einer Hohlwelle (6) befestigt wird,
- anschließend das Fixierelement (10) zumindest teilweise spanend bearbeitet wird,
- anschließend zumindest ein Trägerelement (16) lösbar an dem Fixierelement (10) befestigt wird und
- an dem Trägerelement (16) ein Schneidelement (20) mit einer Schneide (22) angeordnet wird.

13. Verfahren nach Anspruch 12, **dadurch gekennzeichnet, dass** das Fixierelement (10) zur Herstellung einer Trägerelementkontaktfläche (32) spanend bearbeitet wird, an die das Trägerelement (16) angelegt wird, bevor es lösbar befestigt wird.

14. Verfahren nach Anspruch 12 oder 13, **dadurch gekennzeichnet, dass** das Fixierelement (10) zur Herstellung einer Eingangswellenkontaktfläche (42) eines Drehmomentaufnahmeabschnittes (40) des Fixierelementes (10) spanend bearbeitet wird, an die anschließend eine Eingangswelle (4) angelegt wird, bevor sie befestigt wird.

15. Verfahren nach einem der Ansprüche 12 bis 14, **dadurch gekennzeichnet, dass** zumindest zwei identisch ausgebildete Fixierelemente (12, 52) zueinander zumindest teilweise in die axiale Richtung (AR) versetzt an der Außenfläche (8) der Hohlwelle (6) befestigt werden, anschließend die Fixierelemente (12, 52) abweichend voneinander spanend bearbeitet werden und anschließend ein erstes Trägerelement (16) lösbar an dem einen der beiden Fixierelemente (12) befestigt wird und ein weiteres Trägerelement (56) relativ zum ersten Trägerelement (16) in die axiale Richtung (AR) versetzt lösbar an dem anderen der beiden Fixierelemente (52) befestigt wird, wobei an den Trägerelementen (16, 56) jeweils ein Schneidelement (20, 70) mit einer Schneide (22, 72) angeordnet wird.

16. Häckseltrommel nach einem der Ansprüche 1 bis 11, erhalten durch ein Verfahren gemäß einem der Ansprüche 12 bis 15.
